# EUROPÄISCHE PATENTSCHRIFT

(11) **EP 1 271 869 B1**
(45) Veröffentlichungstag und Bekanntmachung des Hinweises auf die Patenterteilung: **17.03.2004**
(21) Anmeldenummer: 01115255.0
(22) Anmeldetag: 23.06.2001
(51) Int. Cl.: H04L 25/49

(54) **Verfahren zur Dekodierung von Biphase-Signalen**
Method for decoding biphase signals
Procédé pour décodage de signaux biphase

(43) Veröffentlichungstag der Anmeldung: 02.01.2003
(73) Patentinhaber: Micronas GmbH, 79108 Freiburg (DE)
(72) Erfinder: Noeske, Carsten, Dipl.-Ing., 79286 Glottertal (DE); Vierthaler, Matthias, Dipl.-Ing., 79108 Freiburg (DE); Hilpert, Thomas, Dipl.-Ing., 79211 Denzlingen (DE)
(74) Vertreter: Sauer, Wolfgang, Dipl.-Ing.

(56) Entgegenhaltungen:
- EP-A- 0 360 770
- EP-A- 0 803 999
- EP-A- 0 912 010
- US-A- 5 475 705
- KWAN-CHENG CHEN ET AL: "ANALYSIS OF SCCL AS A PN-CODE TRACKING LOOP" IEEE TRANSACTIONS ON COMMUNICATIONS, IEEE INC. NEW YORK, US, Bd. 42, Nr. 11, 1. November 1994 (1994-11-01), Seiten 2942-2946, XP000475154 ISSN: 0090-6778

## Beschreibung

Die Erfindung betrifft ein Verfahren zur Dekodierung spezieller Biphase-Signale mit denen digitale Informationen übertragen werden. Dabei werden die Bits der ursprünglichen digitalen Information vor der Übertragung codiert und dann mittels "Symbolen" übertragen. Die Übertragungsverfahren mit Biphase-Signalen sind auch unter der Kurzbezeichnung BPSK (= Binary Phase Shift Keying) bekannt. Damit der Bandbreitebedarf bei der Übertragung dieser digitalen Signale möglichst klein bleibt, werden auf der Sender- und Empfängerseite Nyquist-Filter zur Impulsformung und Signalrückgewinnung verwendet. Die steilen Impulsflanken werden dabei durch flache und mit Überschwingern versehene Übergangskurven ersetzt, wodurch störende Oberwellen weitgehend unterdrückt werden. Im Grenzfall wird anstatt eines impulsförmigen Signals, ein glockenförmiges Signal mit Überschwingern, deren Nulldurchgänge exakt durch konstante Symbolintervalle T definiert sind, übertragen. Der Frequenzbedarf bei dieser Übertragung ist etwa doppelt so groß ist wie die zu übermittelnde Datenrate. Trotzdem ist zu den Abtastzeitpunkten eine sichere Unterscheidung zwischen "1"- und "0"- Zuständen gewährleistet, weil die einzelnen Symbole um ganzzahlige Vielfache von T zeitlich gegeneinander versetzt sind und die Nulldurchgänge alle zusammenfallen.

In EP-A 0 912 010 (intern: C-1751) ist beispielsweise ein typischer Empfänger für digital übertragene Signale beschrieben, der derartige Nyquist-Filter aufweist. Zur sicheren Unterscheidung der logischen Zustände der einzelnen Symbole ist ein Abtastregelkreis vorgesehen, der den Abtastzeitpunkt (=timing recovery) für die einzelnen Symbole optimiert..

In EP-A 0 803 999 ist ein RDS-Demodulator mit Biphase-Dekoder und Datenzuverlässigkeitswert-Generator für Fehlerkorrektur mit "weicher" Entscheidung beschrieben. Bei dem Dekodierungsverfahren nach dieser Patentanmeldung werden aber keine Phasenabtastwerte aus dem Biphase-Signal gebildet.

Eine Eigenschaft digitaler Signale kann sein, daß die digitalen Zustände des zu übertragenden Signals nicht gleichmäßig verteilt sind. Das kann sich auf der Sender- und Empfängerseite wie ein überlagerter Gleichpegel auswirken, der in vielen Fällen unerwünscht ist. Mittels geeigneter Codierungsverfahren kann hier Abhilfe gefunden werden. Dabei wird jedes zu übertragende Bit durch eine in sich ausgeglichene Bitkombination übertragen, wobei über die Reihenfolge der zusammengehörigen Stellen der ursprüngliche Zustandswert kodiert wird. Derartige Codierungsverfahren lassen sich auch verschachtelt anwenden oder mit anderen Codierungsverfahren kombinieren.

Die Biphase-Codierung wird beispielsweise zur Übertragung von digitalen Zusatzinformationen bei einem Rundfunksignal verwendet. Diese Zusatzinformation ist unter der Bezeichnung "RDS-Signal" (= Radio Data Service) bekannt, mit der in vielen Ländern innerhalb vorgegebener FM-Stereo-Radiokanäle eine spezielle Autofahrerinformation übertragen wird. Mit dem digitalen RDS-Signal wird ein bei 57 kHz liegender Hilfsträger, der mit einem Pilotsignal bei 19 kHz verkoppelt ist, durch eine zweistufige, Modulation moduliert. Die Biphase-Codierung ersetzt eine logische "0" durch die Kombination "0,1" und eine logische "1" durch die Kombination "1,0". Jeder logische Zustand der ursprünglichen Datenfolge erzeugt somit zwei aufeinanderfolgende Bits, die als Bitkombination oder auch als Symbolpaar bezeichnet werden.

Durch diese Art der Biphase-Codierung ist sichergestellt, daß innerhalb jedes Symbolpaares immer ein Symbolwechsel stattfindet und sich deshalb auch der Datentakt relativ leicht aus der empfangenen Datenfolge zurückgewinnen läßt. Im Empfänger wird das bei 57 kHz liegende Biphase-Signal mittels digitaler Signalverarbeiteung synchron und komplex ins Basisband heruntergemischt und bandbegrenzt. Da es sich bei dem Biphase-Signal grundsätzlich um eine Phasenmodulation des bei 57 kHz liegenden Trägers handelt, kann man auch eine komplexe Zeigerbetrachtung anwenden. Theoretisch ergibt sich dabei ein rotierender Zeiger, der nach dem Mischen mit 57 kHz zum Stillstand kommt. Ein Träger-und Phasenregelkreis (=carrier/phaserecovery) dreht ferner den komplexen Zeiger auf die reelle Achse, so daß keine imaginären Anteile mehr vorhanden sind. Anschließend wird z.B. ein Cordic-Algorithmus zur Ermittlung der Phase und des Betrags verwendet.

Zu den Abtastzeitpunkten auf der Symbolrate ist nun idealerweise die Phase durch zwei Zustände bestimmt, , wohingegen der Betrag jedo konstant sein sollte. In der Realität werden diese theoretischen Zustände lediglich angenähert erreicht und durch Störsignale zusätzlich verfälscht. Aus den dabei erhaltenen Phasenwerten werden die beiden logischen Zustände "0" oder "1" entschieden und eine entsprechende Bitfolge gebildet. Aus dieser Bitfolge werden zusammengehörige Zweiergruppen gebildet, die entsprechend der senderseitigen Codierung immer einen Bitwechsel aufweisen müssen. Die Bildung der Zweiergruppen kann auf der Erkenntnis beruhen, daß bei der Gruppenbildung die Anzahl der nicht erlaubten Symbolpaare "0,0"- und "1,1"-Gruppen minimal wird. Im letzten Schritt wird jeder Zweiergruppe entweder eine logische "0" oder "1 zugeordnet, wodurch die ursprüngliche Datenfolge auf der Empfängerseite wiederhergestellt ist. Durch Übertragungsfehler gibt es jedoch fehlerhafte Gruppen mit "0,0"- und "1,1"-Zuständen.

Es ist Aufgabe der im Anspruch 1 gekennzeichneten Erfindung, für ein bei der digitalen Übertragung von Daten verwendetes Biphase-Signal ein verbessertes Dekodierungsverfahren anzugeben, das Übertragungsfehler erkennt und korrigiert, wodurch auch bei größeren Signalstörungen noch eine zufriedenstellende Datenübertragung sichergestellt wird.

Die Lösung der Aufgabe erfolgt durch die im Kennzeichen des Patentanspruchs 1 genannten Verfahrensschritte. Vorteilhafte Ausgestaltungen sind in den abhängigen Ansprüchen definiert. Die Lösung der Aufgabe besteht darin, die bei der Dekodierung entstehende Bitfolge daraufhin zu prüfen, wie groß die Zuverlässigkeiten der einzelnen Bits sind oder wie groß die Wahrscheinlichkeiten der einzelnen Bits sind, daß ihr logischer Zustand richtig oder falsch ist. Die Bildung eines Zuverlässigkeits- oder Wahrscheinlichkeitswertes wird aus den zur Verfügung stehenden Betragswerten des Biphase-Signals gebildet. Die Übertragungsfehler als solche sind aufgrund des fehlenden Bitwechsels innerhalb der Zweierkombination sofort erkennbar.

Ein Vergleich der momentanen Zeigerlängen bei der fraglichen Bitkombination erlaubt eine Aussage über die Zuverlässigkeit oder Wahrscheinlichkeit der erkannten Zustände. Bei einer Überlagerung des Biphase-Signals mit einem Störsignal können die momentanen Betragsund/oder Phasenwerte gegenüber den theoretischen Werten teils vergrößert, teils verkleinert werden. Unsicher wird die Auswertung natürlich vor allen Dingen dort, wo die Signalwerte und das Störsignal gegensinnig wirken, weil die resultierenden Differenzsignale eventuell sehr klein werden oder gar zu einem Vorzeichenwechsel führen. Zuverlässigere Aussagen und Auswertungen sind demnach mit relativ großen Signalen möglich, während relativ kleine Signale stets Unsicherheiten mit sich bringen. Wenn eine vorliegende Bitkombination einen Fehler enthält, dann ist die Wahrscheinlichkeit groß, daß die größeren Betragswerte den richtigen und die kleineren den falschen Signalzustand bezeichnen. Der Vergleich erfolgt beispielsweise über eine Differenzbildung der digitalisierten Zeigerlängen, wenn diese als Betragswerte vorliegen. Statt der Betragsbildung, die bei dem üblicherweise in der Signalverarbeitung verwendeten Zweierkomplementsystem einfach ist, können gegebenenfalls auch quadrierte Zeigerlängen zur Differenzbildung verwendet werden. Als Einganswerte für das Dekodierungsverfahren können auch die Ausgangsignale eines Cordic-Demodulators dienen. Derartige Cordic-Demodulatoren werden zunehmend zur Demodulation von phasen- und/oder amplitudenmodulierten Signalen verwendet. An einem Ausgang des Cordic-Demodulators ist der momentane Phasenwert und an einem andern Ausgang der momentane Betrag des resultierenden Zeigers abgreifbar. Bei reelwertigen Modulationsverfahren, wie beispielsweise beim Biphase-Signal, liefert der Amplitudenausgang den Betrag des Abtastwertes und der Phasenausgang das positive oder negative Vorzeichen. Ob die einzelnen Funktionseinheiten zur Durchführung der Wahrscheinlichkeitsprüfung und zur Dekodierung mittels Programmablaufs, mittels Schaltungstechnik oder in gemischter Form ausgeführt sind oder auch für andere Aufgaben mitverwendet werden, ist für die Erfindung unerheblich.

Die Erfindung und vorteilhafte Weiterbildungen werden nun anhand der Figuren der Zeichnung näher erläutert:
Fig. 1 zeigt schematisch im Zeitdiagramm das Dekodierungsverfahren nach der Erfindung,
Fig. 2 zeigt schematisch das Dekodierungsverfahren als Flußdiagramm und
Fig. 3 zeigt eine Tabelle zur Bildung einer korrigierten Bitkombination.

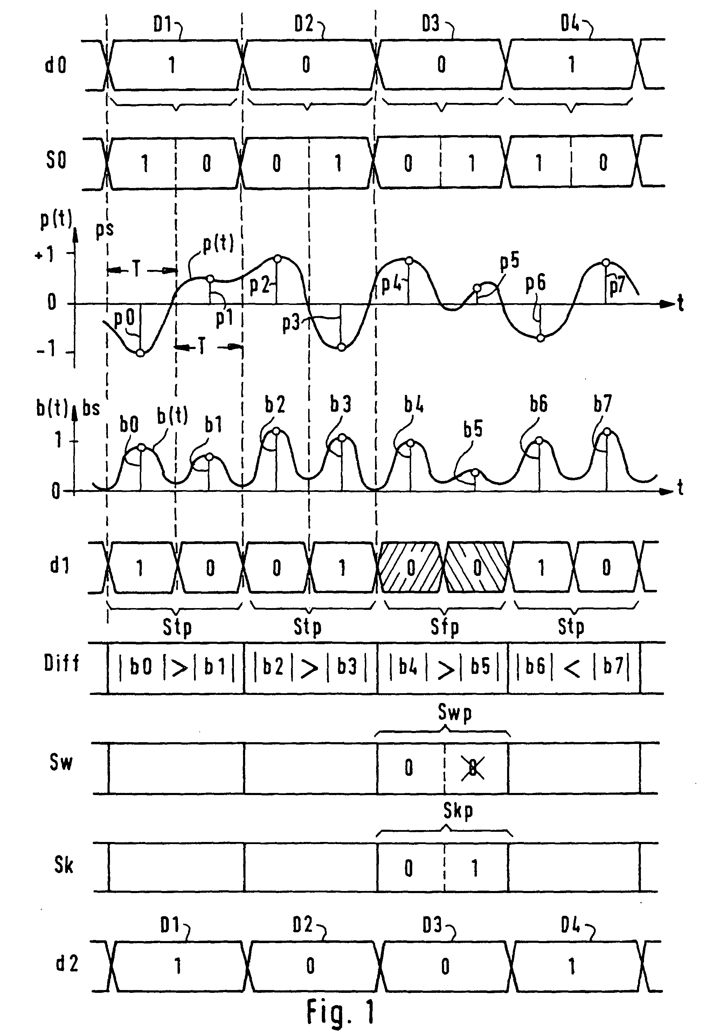

Im Zeitdiagramm von Fig. 1 sind untereinander die zusammengehörigen Daten-, Signal- und Abtastfolgen eines Signalabschnittes von D1 bis D4 dargestellt. Durch Übertragungsfehler wird die Bitfolge auf der Empfängerseite teilweise fehlerhaft empfangen. An einem Beispiel wird gezeigt, wie nach der Erfindung dieser Fehler auf der Empfängerseite korrigiert werden kann, wodurch die ursprüngliche Datenfolge wieder hergestellt wird.

Die erste Zeile zeigt das ursprüngliche digitale Signal d0 mit den ursprünglichen Daten D1, D2, D3 und D4, denen die logischen Zustandswerte "1", "0", "0" und schließlich "1" zugeordnet sind. Damit der Übertragungsweg auch bei unterschiedlichsten digitalen Signalfolgen d0 im zeitlichen Mittel gleichpegelfrei bleibt, wird aus der ursprünglichen Datenfolge d0 eine neue Datenfolge S0 gebildet, bei der diese Gleichpegelfreiheit für jedes ursprüngliche Bit erzwungen wird. In der zweiten Zeile wird jedem der ursprünglichen Bits dabei eine Bitkombination Stp zugeordnet, die in sich gleichpegelfrei ist. Im einfachsten Fall wird jedes ursprüngliche Bit durch sein komplementäres Bit ergänzt. Der ursprüngliche Zustand "1" wird so durch die Zustände "1,0" ersetzt. Entsprechend wird der ursprüngliche Zustand "0" durch die Bitkombination "0,1" ersetztEine bekannte Anwendung für die Biphase-Codierung findet sich wie bereits angegeben innerhalb spezieller Rundfunk-Stereo-Signale. Auf der Empfängerseite kann eindeutig aus der Erkennung einer "1,0" - oder "0,1"-Bitfolge wieder auf die ursprünglichen Daten "1" oder "0" zurückgeschlossen werden.

Der Übergang zwischen den einzelnen Zuständen erfolgt natürlich nicht abrupt, sondern kontinuierlich. Der zeitliche Verlauf auf der Empfängerseite entspricht dabei etwa dem Phasensignl p(t) und dem Betragssignal b(t) der dritten bzw. vierten Zeile. Um die Übertragung der digitalen Signale mit möglichst wenig Bandbreite durchzuführen, sind die Datenflanken sehr abgerundet und enthalten dadurch wenig Oberwellen. Vorzugsweise werden auf der Sender- und Empfängerseite Nyquist-Filter verwendet, mit denen der Bandbreitenbedarf erheblich eingeschränkt werden kann. Wenn der richtige Abtastzeitpunkt getroffen wird, reicht ein einziger Abtastwert ps des Phasensignals p(t) aus, um den logischen Zustand des zugehörigen Bits oder Symbols zu erfassen. Auf diese Weise erhält man die Phasenabtastwerte p0 bis p7.. Entsprechend der Zeigerdarstellung sollten diese Abtastwerte bei 0 (=360) Grad und +/-180 Grad liegen.. Im Bogenmaß sind das die Werte 0 (=2π) und +/-π. Welcher dieser Phasenwerte der logischen "1" und logischen "0" zugeordnet wird ist beliebig. In Zeile 3 sind an der Ordinate die mit πnormierten Phasenlagen des Phasensignals p(t) mit -1 und +1 angegeben, wobei der Ordinatenwert 0 einer mittleren Phasenlage entspricht. Der Phasenbereich von -1 bis 0 ist im Ausführungsbeispiel dem logischen Zustand "1" zugeordnet und der Phasenbereich von 0 bis +1 1 dem logischen Zustand "0".

Die vierte Zeile zeigt den zeitlichen Verlauf des Betragssignals b(t) des resultierenden Zeigers beim Biphase-Signal vor der Dezimation auf die Symbolrate. Da es sich beim Biphase-Signal theoretisch um ein reelwertiges Signal handelt, das nur die diskreten Werte +1 und -1 auf der reellen Achse annimmt, müßte der Betrag zwischen den Werten 0 und 1 hin und herwandern Zur Ermittlung der Zuverlässigkeit oder der Wahrscheinlichkeit der einzelnen Teile einer fehlerhaften Bitkombination wird das Betragssignal b(t) nach der Erfindung abgetastet und bildet so die Betragsabtastwerte b0, b1, b2 bis b7. Die Abtastung erfolgt dabei synchron zur Bildung der Phasenabtastwerte ps.

Die Phasenabtastwerte ps zeigen, daß innerhalb der ersten, zweiten und vierten Bitkombination ein Vorzeichenwechsel der Phasenabtastwerte stattfindet, nicht jedoch in der dritten Bitkombination mit den Abtastwerten p4 und p5. Durch Überlagerung von Störsignalen sind diese beiden Abtastwerte positiv, entsprechen also jeweils dem logischen Zustand "0". Die fünfte Zeile zeigt ein erstes digitales Signal d1, das den Vorzeichen der einzelnen Phasenabtastwerte p0 bis p7 entspricht. War der Abtastwert ps negativ, dann steht dafür "1", war der Abtastwert positiv, dann steht dafür "0". Die zusammengehörigen Bitkombinationen Stp sind mittels Klammern kenntlich gemacht. Die dritte Bitkombination zeigt eine fehlerhafte Bitkombination Sfp; sie ist zusätzlich durch Schraffur hervorgehoben.

Die sechste Zeile Diff zeigt die Größenvergleiche der Betragsabtastwerte bs innerhalb der aufeinanderfolgenden Bitkombinationen Stp. Der Größenvergleich erfolgt über die Abtastwerte b0 bis b7. Das Ergebnis zeigt das mathematische Vergleichssymbol ">" oder "<" an. In einem Ausführungsbeispiel wird später gezeigt, daß der Vergleich zweckmäßigerweise über eine Subtraktion gebildet wird, deren resultierendes Vorzeichen dann als positives oder negatives Vergleichsergebnis weiterverarbeitet wird. Solange es sich bei den erhaltenen Bitkombinationen um erlaubte Symbolpaare handelt, hat die Vergleichsbildung keine weitere Bedeutung. Anders ist es jedoch bei der fehlerhaften Bitkombination Sfp, bei der beide Phasenabtastwerte p4, p5 positiv sind und somit jeweils einen logischen Zustand "0" signalisieren. Gemäß der Erfindung ist anzunehmen, daß mittels der Auswertung der Betragsabtastwerte b4, b5 eine Unterscheidung möglich wird. Der größere der beiden Betragsabtastwerte zeigt wahrscheinlich die richtige Information und der kleinere Betragsabtastwert wahrscheinlich die falsche Information an.

Die Wahrscheinlichkeitsbewertung der fehlerhaften Bitkombination Sfp zeigt schematisch die Bitfolge Sw der siebten Zeile. In dieser Wahrscheinlichkeitsfolge Sw ist lediglich die dritte Bitkombination Swp von Interesse, weil deren Aussage für die fehlerhafte Bitkombination Sfp von Bedeutung ist. Von dieser Bitkombination Sfp ist der erste Zustand "0" wahrscheinlich gültig und der zweite Zustand "0" wahrscheinlich falsch. Damit läßt sich sofort eine korrigierte Bitkombination Skp mit "0,1" finden. Dies zeigt die achte Zeile mit der korrigierten Bitfolge Sk. Der Inhalt der ersten, zweiten und vierten Bitkombination in der korrigierten Bitfolge Sk ist dabei ohne Bedeutung. Für die Auswertung kann es jedoch zweckmäßig sein, daß die als gültig erkannten Bitkombinationen Stp vom ersten digitalen Signal d 1 in der korrigierten Bitfolge Sk vorhanden und damit für die Auswerteeinrichtung einfach zugänglich sind.

Die neunte Zeile zeigt schließlich als Ergebnis der Dekodierung ein zweites digitales Signal d2, das aus den gültigen und korrigierten Bitkombinationen Sgp bzw. Skp wieder die zugeordneten Daten D1, D2, D3 und D4 mit "1", "0", "0" und schließlich "1" bildet, die mit den Daten des ursprünglichen digitalen Signals d0 wieder identisch sind. Der Übertragungsfehler bei der dritten Bitkombination ist somit korrigiert.

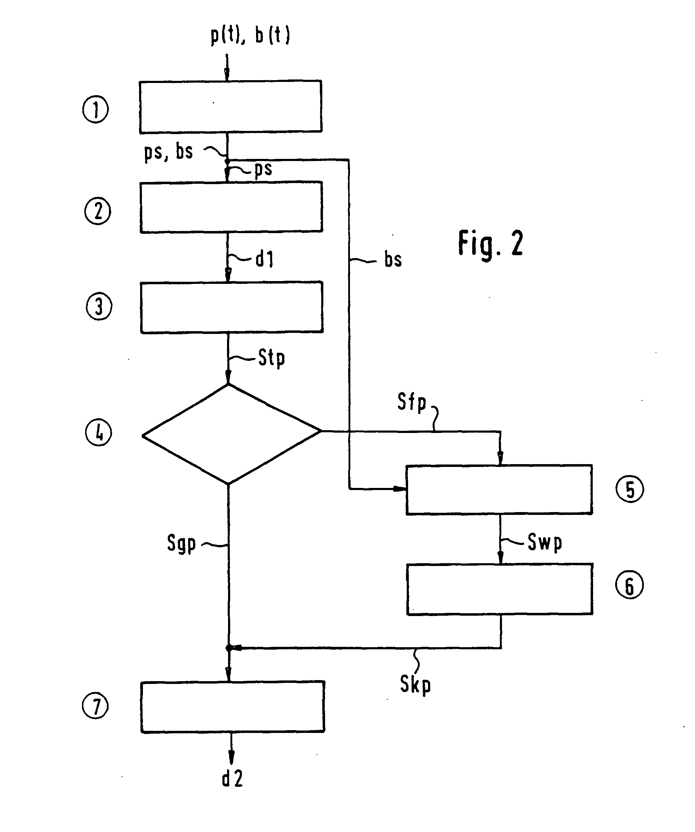

In Fig. 2 ist schematisch das Dekodierungsverfahren nach der Erfindung als Flußdiagramm dargestellt. Die Bezugszeichen entsprechen dabei dem Zeitdiagramm nach Fig. 1. In einem ersten Schritt werden Phasen- und Betragsabtastwerte ps bzw. bs des Biphase-Signals bzw. aus seinen entsprechenden Komponenten p(t), b(t) gebildet. Da die einzelnen Verfahrensschritte zweckmäßigerweise als digitale Verfahrensschritte ausgebildet sind, werden die Phasen- und Betragsabtastwerte aus bereits digitalisierten Abtastwerten gebildet oder spätestens in diesem ersten Schritt digitalisiert. Falls die ursprüngliche Abtastung und Digitalisierung mit einer Überabtastung erfolgte, enthält der erste Schritt eine Dezimierung zur Bildung der gewünschten Phasen- und Betragsabtastwerte. Für die digitale Signalverarbeitung wird in der Regel ein normierter Skalenbereich von -1 bis +1 verwendet, wobei die einzelnen Werte im Zweierkomplement-Zahlenstandard angegeben werden. Die Digitalisierung der Phasenabtastwerte ps vereinfacht sich, wenn lediglich das Vorzeichen der Phasenabtastwerte für die weitere Verarbeitung verwendet wird.

In einem zweiten Schritt wird aus den digitalisierten Phasensabtastwerten ps eine Datenfolge gebildet, die ein erstes digitales Signal d1 darstellt. Entsprechend den beiden Zuständen im Biphase-Signal enthält das digitale Signal d1 in seiner Bitfolge zwei logische Zustände. Die Entscheidung fällt durch das Vorzeichen der abgetasteten Phasenwerte ps.

In einem dritten Schritt werden aus der Bitfolge des digitalen Signals d1 zusammengehörige Bitkombinationen Stp gebildet. Jede zusammengehörige Bitkombination ist dabei einem ursprünglichen Datenwert entsprechend der senderseitigen Codierung zugeordnet. Bei dem gleichpegelfreien Codierungsverfahren des Anwendungsbeispiels muß jede Bitkombination Stp einen Bitwechsel aufweisen. Bei den Bits benachbarter Bitkombinationen muß diese Bedingung nicht erfüllt sein.

In einem vierten Schritt wird entschieden, ob es sich bei der zusammengehörigen Bitkombination Stp um eine gültige Bitkombination Sgp oder um eine fehlerhafte Bitkombination Sfp handelt. Zu dieser Entscheidung dient beispielsweise der eben angesprochene Bitwechsel innerhalb der zusammengehörigen Bitkombination Stp.

In einem fünften Schritt wird die fehlerhafte Bitkombination Sfp einer Wahrscheinlichkeitsprüfung unterzogen. Hierbei werden aus den Betragsabtastwerten bs Wahrscheinlichkeitswerte gebildet, die entscheiden, welche Teile der fehlerhaften Bitkombination Sfp wahrscheinlich richtig und/oder welche wahrscheinlich falsch sind. Wie bereits mehrfach erwähnt, liefert ein Größenvergleich der einzelnen Betragsabtastwerte bs das Kriterium für die Aussage, welche Teile St1, St2 der Bitkombination Sfp wahrscheinlich richtig und/oder welche wahrscheinlich falsch sind.

An die Wahrscheinlichkeitsprüfung schließt sich ein sechster Schritt an, in dem eine korrigierte Bitkombination Skp gebildet wird. Die Korrektur ist sehr einfach, weil beispielsweise lediglich das falsche Bit invertiert werden muß.

In einem siebten Schritt wird schließlich mittels eines Ausgangsdekoders ein zweites digitales Signal d2 gebildet, dessen Datenzustände entweder aus der als gültig angesehen Bitkombination Sgp oder beim Vorliegen der fehlerhaften Bitkombination Sfp aus der korrigierten Bitkombination Skp gebildet werden.

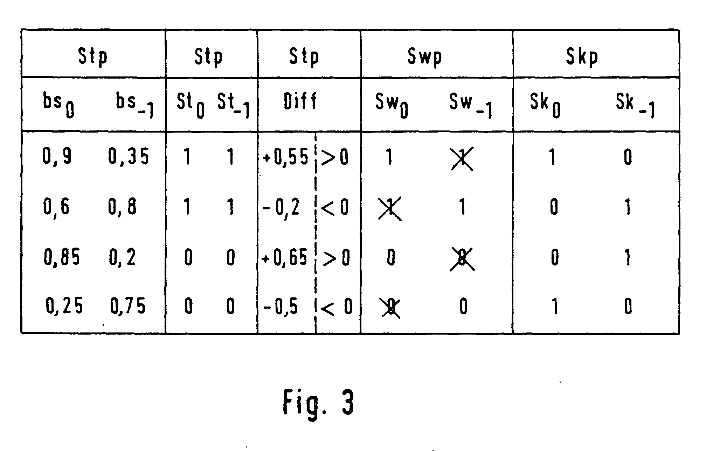

Die Verarbeitungsweise bei der Korrektur läßt sich auch anhand der Tabelle in Fig. 3 am Beispiel von vier fehlerhaften Bitkombinationen darstellen. Die fünf Spalten zeigen die anfallenden Verarbeitungen und die vier Zeilen geben die Beispiele für die vier möglichen fehlerhaften Bitkombinationen an. Die erste Spalte enthält Zahlenbeispiele für die Betragsabtastwerte bs₀ und bs₋₁ einer Bitkombination Stp. Die zweite Spalte zeigt die logischen Zustände "0" oder "1" des ersten und zweiten Teils St₀, St₋₁ der Bitkombination Stp, die sich aus den abgetasteten Phasenwerten ps₀ und ps₋₁ ergeben. In keiner der vier Zeilen findet dabei ein Bitwechsel statt. Die dritte Spalte gibt die Differenz Diff an, die sich aus der Differenz der Beträge des momentanen und verzögerten Betragsabtastwertes bs₀ bzw. bs₋₁ der ersten Spalte ergibt. Zusätzlich zeigt diese Spalte das Vergleichsergebnis auch als "<0" oder ">0". Die vierte Spalte zeigt die Wahrscheinlichkeitsbewertungen der beiden Teile Sw₀ bzw. Sw₋₁ der zu untersuchenden Bitkombination Swp. Die durchstrichenen logischen Zustände symbolisieren den vermutlich fehlerhaften Teil. Die nicht durchstrichenen Zustände symbolisieren den vermutlich gültigen Teil. Die letzte Spalte Skp zeigt die einzelnen Teile Sk₀ bzw. Sk₋₁ der korrigierten Bitkombination Skp, aus der wieder der ursprüngliche Zustand "0" oder "1" wie bei einer gültig empfangenen Bitkombination Sgp dekodiert werden kann

### Bezugszeichenliste

- b(t): Betragssignal
- bs; b0 .... b7: Betragsabtastwerte
- bs₀: momentaner Betragsabtastwert
- bs₋₁: um ein Symbolintervall T verzögerter Betragsabtastwert
- c1: Takt, Systemtakt
- d0: ursprüngliche Datenfolge
- d1, d2: 1./ 2. digitales Signal
- D1, D2, D3, D4: ursprüngliche Daten
- Diff: Vergleichsergebnis / Vergleichssignal
- p(t): Phasensignal
- ps; p0 ... p7: Phasenabtastwerte
- ps₀: momentaner Phasenabtastwert
- ps₋₁: um ein Symbolintervall T verzögerter Phasenabtastwert
- S0: ursprüngliche Bitfolge (Symbolfolge)
- Sf1, Sf2: fehlerhafte Bitkombination
- Sf2: fehlerhafter Teil der Bitkombination.
- Sfp / Swp / Skp: fehlerhafte / w.-bewertete / korrigierte Bitkombination
- Sg1: gültiger Teil der Bitkombination.
- Sg1, Sg2: gültige Bitkombination
- Sk1, Sk2 / Sk₀, Sk₋₁ / Skp: korrigierte Bitkombination
- St1, St2 / Stp: zusammengehörige Bitkombination
- St₀ / St₋₁: momentanes / um ein Symbolintervall T verzögertes Bit
- Sk: korrigierte Bitfolge
- Sw: Wahrscheinlichkeitsbewertete Bitfolge
- Sw1, Sw2 / Sw₀, Sw₋₁: Wahrscheinlichkeitswert
- T: Symbolintervall

## Patentansprüche

1. Verfahren zur Dekodierung von Biphase-Signalen, mit folgenden Schritten:
- in einem ersten Schritt werden aus dem Biphase-Signal oder dessen Komponenten Phasenabtastwerte (ps) und Betragsabtastwerte (bs) gebildet
- in einem zweiten Schritt wird aus den Phasenabtastwerten (ps) entsprechend einem Kriterium, insbesondere einem Schwellenkriterium, ein erstes digitales Signal (d1) gebildet,
- in einem dritten Schritt werden aus dem ersten digitalen Signal (d1) zusammengehörige Bitkombinationen (Stp) gebildet,
- in einem vierten Schritt wird entschieden, ob es sich bei der zusammengehörigen Bitkombination (Stp) um eine gültige Bitkombination (Sgp) oder um eine fehlerhafte Bitkombination (Sfp) handelt,
- in einem fünften Schritt werden mittels einer Wahrscheinlichkeitsprüfung Wahrscheinlichkeitswerte (Swp) gebildet, die entscheiden, welche Teile der fehlerhaften Bitkombination (Sfp) wahrscheinlich richtig und/oder welche wahrscheinlich falsch sind,
- in einem sechsten Schritt wird mittels der Wahrscheinlichkeitswerte (Swp) eine korrigierte Bitkombination (Skp) erzeugt und
- in einem siebten Schritt wird ein zweites digitales Signal (d2) gebildet, dessen Datenzustände entweder aus der als gültig angesehenen Bitkombination (Sgp) oder beim Vorliegen der fehlerhaften Bitkombination (Sfp) aus der korrigierten Bitkombination (Skp) gebildet werden.

2. Verfahren nach Anspruch 1, **dadurch gekennzeichnet, daß** zur Bildung der Wahrscheinlichkeitswerte (Swp) die Betragsabtastwerte (bs) verwendet werden.

3. Verfahren nach Anspruch 2, **dadurch gekennzeichnet, daß** die Wahrscheinlichkeitsprüfung bei der fehlerhaften Bitkombination (Sfp) mittels der Betragsabtastwerte (b4, b5) erfolgt, wobei
- der größere Betragsabtastwert (b4) denjenigen Teil der fehlerhaften Bitkombination (Sfp) bezeichnet, der als richtig anzunehmen ist und/oder
- der kleinere Betragsabtastwert (b5) denjenigen Teil der fehlerhaften Bitkombination (Sfp) bezeichnet, der als falsch anzunehmen ist.

## Claims

1. A method of decoding biphase signals, comprising the following steps:
- in a first step, phase sample values (ps) and magnitude sample values (bs) are formed from the biphase signal or its components;
- in a second step, a first digital signal (d1) is derived from the phase sample values (ps) according to a given criterion, particularly a threshold criterion;
- in a third step, matching bit combinations (Stp) are formed from the first digital signal (d1);
- in a fourth step, a decision is made as to whether the matching bit combination (Stp) is a valid bit combination (Sgp) or an erroneous bit combination (Sfp);
- in a fifth step, a probability check is made to obtain probability values (Swp) that decide which parts of the erroneous bit combination (Sfp) are probably true and/or which are probably false;
- in a sixth step, a corrected bit combination (Skp) is generated by means of the probability values (Swp); and
- in a seventh step, a second digital signal (d2) is formed whose data states are formed either from the valid bit combination (Sgp) or, in the presence of an erroneous bit combination (Sfp), from the corrected bit combination (Skp).

2. A method as set forth in claim 1, **characterized in that** the probability values (Swp) are formed using the magnitude sample values (bs).

3. A method as set forth in claim 2, **characterized in that** in the case of the erroneous bit combination (Sfp), the probability check is made by means of the magnitude sample values (b4, b5), with
- the greater magnitude sample value (b4) indicating that part of the erroneous bit combination (Sfp) which must be assumed to be true, and/or
- the smaller magnitude sample value (b5) indicating that part of the erroneous bit combination (Sfp) which must be assumed to be false.

## Revendications

1. Procédé pour le décodage de signaux à deux états de phase, comportant les étapes suivantes :
- dans une première étape, on forme, à partir du signal à deux états de phase ou de ses composantes, des valeurs d'échantillonnage de la phase (ps) et des valeurs d'échantillonnage de la grandeur (bs),
- dans une deuxième étape, on forme, à partir des valeurs d'échantillonnage de la phase (ps), un premier signal numérique (d1), en correspondance avec un critère, en particulier un critère de seuil,
- dans une troisième étape, on forme, à partir du premier signal numérique (d1), des combinaisons de bits associées (Stp),
- dans une quatrième étape, on détermine si, en ce qui concerne la combinaison de bits associée (Sfp), il s'agit d'une combinaison de bits correcte (Sgp) ou d'une combinaison de bits contenant des erreurs (Sfp),
- dans une cinquième étape, on forme au moyen d'un test de probabilité, des valeurs de probabilité (Swp) qui déterminent quelles parties des combinaisons de bits associées contenant des erreurs (Sfp) sont probablement exactes et/ou lesquelles sont probablement fausses,
- dans une sixième étape, on produit, au moyen des valeurs de probabilité (Swp), une combinaison de bits corrigée (Skp) et
- dans une septième étape, on forme un deuxième signal numérique (d2) dont les états des données sont formés, soit à partir de la combinaison de bits considérée comme valable (Sgp), soit, dans le cas d'une combinaison de bits contenant des erreurs (Sfp), à partir de la combinaison de bits corrigée (Skp).

2. Procédé selon la revendication 1, **caractérisé en ce que**, pour la formation des valeurs de probabilité (Swp), on utilise les valeurs d'échantillonnage de la grandeur (bs).

3. Procédé selon la revendication 2, **caractérisé en ce que** le test de probabilité est effectué, dans le cas de la combinaison de bits contenant des erreurs (Sfp), au moyen des valeurs d'échantillonnage de la grandeur (b4, b5),
- la valeur d'échantillonnage de la grandeur (b4) la plus grande désignant la partie de la combinaison de bits contenant des erreurs (Sfp) qui doit être considérée comme étant correcte et/ou
- la valeur d'échantillonnage de la grandeur (b5) la plus petite désignant la partie de la combinaison de bits contenant des erreurs (Sfp) qui doit être considérée comme étant fausse.
